# EUROPÄISCHE PATENTSCHRIFT

(11) **EP 1 692 033 B1**
(45) Veröffentlichungstag und Bekanntmachung des Hinweises auf die Patenterteilung: **10.12.2008**
(21) Anmeldenummer: 04764660.9
(22) Anmeldetag: 31.08.2004
(51) Int. Cl.: B62D 21/15

(54) **VORRICHTUNG FÜR EIN KRAFTFAHRZEUG ZUM INSASSENSCHUTZ BEI EINEM KOLLISIONSBEDINGTEN, AUF EINE KRAFTFAHRZEUGTÜR GERICHTETEN ENERGIEEINTRAG**
DEVICE FOR A MOTOR VEHICLE THAT AFFORDS OCCUPANT PROTECTION DURING THE IMPACT OF ENERGY DIRECTED AGAINST A MOTOR VEHICLE DOOR AS A RESULT OF A CRASH
DISPOSITIF POUR PROTEGER LES OCCUPANTS D'UN VEHICULE EN CAS D'IMPACT ENERGETIQUE EXERCE SUR UNE PORTIERE LORS D'UNE COLLISION

(30) Priorität: 11.12.2003 DE 10358023
(43) Veröffentlichungstag der Anmeldung: 23.08.2006
(73) Patentinhaber: Fraunhofer-Gesellschaft zur Förderung der angewandten Forschung e.V., 80686 München (DE); Faurecia Innenraum Systeme GmbH, 76767 Hagenbach (DE)
(72) Erfinder: MELZ, Tobias, 64285 Darmstadt (DE); KANG, Ho-Sung, F-92160 Antony (FR); ZIMMERMAN, Eric, 34125 Kassel (DE)
(74) Vertreter: Rösler, Uwe
(86) Internationale Anmeldenummer: PCT/EP2004/009695
(87) Internationale Veröffentlichungsnummer: WO 2005/061308

(56) Entgegenhaltungen:
- DE-A-2102004 006 25
- US-B1- 6 237 991

## Beschreibung

### Technisches Gebiet

Die Erfindung bezieht sich auf eine Vorrichtung für ein Kraftfahrzeug zum Insassenschutz bei einem kollisionsbedingten, auf eine Kraftfahrzeugtür gerichteten Energieeintrag.

### Stand der Technik

Der Insassenschutz bei Kraftfahrzeugen gilt als eine der Hauptaufgaben bei der Konstruktion und Neuentwicklung von Kraftfahrzeugen. Ein eigenes Entwicklungsziel dient der Auslegung ausgeprägter Knautschzonen im Front- und Heckbereich, die die Fahrgastzelle bei Front- und Heckkollisionen weitgehend sicher zu schützen vermögen. Bei seitlichen Kollisionen hingegen bereitet der Insassenschutz aufgrund der kleinen zur Verfügung stehenden Deformationswege und des geringen Absorptionsvermögens der Seitenstruktur eines Kraftfahrzeuges größere Probleme.

Bekannte Lösungen zur Entschärfung der bei Seitenkollisionen von Kraftfahrzeugen bestehenden Gefahr für die Insassen sehen Versteifungen der Kraftfahrzeugtür vor. So sind beispielsweise in die Kraftfahrzeugtür integrierte Profile, die in Fahrzeugquerrichtung eine hohe Steifigkeit und/oder ein hohes Energieaufnahmevermögen besitzen, bekannt. Beispielsweise geht aus der DE 196 33 637 A1 eine Fahrzeugtür mit Seitenaufprallschutz hervor, in deren Türrahmen bogenförmig ausgebildete Haltestangen vorgesehen sind, die im Kollisionsfall derart verdreht und unter Zugbelastung gleichsam der Wirkung eines Fangnetzes deformiert werden.

Eine derartige Versteifung der Seitentüren durch Vorsehen entsprechender Längsträger ist jedoch in schwerwiegenden Kollisionsfällen nicht immer ausreichend zur Sicherung der Insassen, da bei einer äußeren Krafteinwirkung auf die Seitentür diese durch den Türausschnitt der Fahrzeugkarosserie regelrecht durchgedrückt werden kann, so dass der Überlebensraum der Insassen drastisch eingeengt und die Überlebenschancen gleichsam reduziert werden.

Der Stand der Technik kennt überdies eine Reihe von Maßnahmen, die geeignet sind, auf die Seitentür einwirkende Kräfte auf die Fahrzeugkarosserie zu übertragen. Beispielsweise durch entsprechend große Überlappung zwischen Tür und Türausschnitt oder durch aus dem Rand der Tür herausragende Bolzen, die im Kollisionsfall in verstärkte Aussparungen des Türausschnittes der Kfz-Karosserie eingreifen. So geht aus der DE AS 22 15 674 eine für eine Kfz-Tür vorgesehene Verstärkungseinrichtung hervor, die im wesentlichen aus einem nach außen gewölbten Träger besteht, dessen Endabschnitte bei einer durch einen äußeren Aufprall bewirkten Deformation des Trägers in eine gestreckte Form in entsprechend stabile Ausnehmungen innerhalb des Türrahmens eindringen. Der Träger besteht vorzugsweise aus profiliertem Stahlblech, das typisch durch Umformen in entsprechende Form gebracht wird.

Zur Vermeidung eines durch die vorstehenden Maßnahmen bedingte Zunahme des Eigengewichtes des Kraftfahrzeuges wird in der DE 41 25 299 C2 eine für eine Kfz-Tür vorgesehene Verstärkungseinrichtung beschrieben, die aus Gründen der Gewichtsreduzierung aus einer, aus faserverstärktem Verbundwerkstoff gefertigten bogenförmig geformten Verstärkungsträgereinrichtung besteht. Auch in diesem Fall befindet sich die Verstärkungsvorrichtung vollständig innerhalb der Tür, die lediglich im Kollisionsfall aufgrund der einhergehenden Deformation des Verstärkungsträgers beidseitig mit den Endbereichen aus der Tür hervortritt, die ihrerseits wiederum mit stabilen Abstützflanken im Türrahmen der Kfz-Karosserie in Wirkverbindung treten.

Aus der DE 196 39 519 A1 ist eine Fahrgastzelle zu entnehmen, die als Schutzeinrichtung für die Fahrzeuginsassen im Falle einer Seitenkollision eine Querträgerkonstruktion vorsieht, die im Kollisionsfall eine starre Querverbindung zwischen der Fahrzeugtür und der Mittelskonsole herstellt, so dass der Sitzbereich vor in die Fahrgastzelle eindringenden Fahrzeugtürbereichen geschützt werden soll. Die Querträgerkonstruktion tritt lediglich im Kollisionsfall in Erscheinung, indem pyrotechnische oder pneumatische Aktoren, die ansonsten in der Sitz-, Tür- und Mittelkonsolenverkleidung integrierte, gelenkig ausgebildete Querträgerkonstruktion unter Ausbildung einer stabilen Querverbindung auslängt.

Eine Vorrichtung für ein Kraftfahrzeug zum Insassenschutz bei einer seitlichen Kollision gemäß dem Oberbegriff des Anspruchs 1 ist aus der US 6 237 991 B1 bekannt.

### Darstellung der Erfindung

Ausgehend von dem vorbezeichneten Stand der Technik liegt der Erfindung die Aufgabe zugrunde, ein den Insassenschutz optimierendes Sicherheitssystem anzugeben, das im Falle eines Seitenaufpralls oder einer dem Seitenaufprall ähnlichen Kollisionssituation einen erhöhten Insassenschutz zu bieten vermag. Insbesondere gilt es, das Sicherheitssystem dahingehend zu verbessern, dass die im Kollisionsfall seitlich auf eine Kraftfahrzeugtür einwirkende Deformationsenergie gezielt und sicher aus dem Bereich der Kraftfahrzeugtür weggeleitet wird, um letztlich zu verhindern, dass der Insassenraum durch kollisionsbedingte Deformationen der Kraftfahrzeugtür übergebühr reduziert wird bzw. Teile derselben bei Eindringen den Insassen verletzen.

Die Lösung der der Erfindung zugrundeliegenden Aufgabe ist im Anspruch 1 angegeben. Den Erfindungsgedanken vorteilhaft weiterbildende Merkmale sind Gegenstand der Unteransprüche sowie der Beschreibung insbesondere unter Bezugnahme auf das Ausführungsbeispiel zu entnehmen.

Die Vorrichtung für ein Kraftfahrzeug zum Insassenschutz bei einem kollisionsbedingten, seitlich auf eine Kraftfahrzeugtür gerichteten Energieeintrag, mit einer Verbindungsstruktur, die wenigstens zwei Teile, einen ersten und einen zweiten Teil aufweist, von denen der erste Teil mit der Kraftfahrzeugtür und der zweite Teil mit einem Energie absorbierenden, im Fahrzeuginnenraum befindlichen Bereich der Kraftfahrzeugkarosserie fest verbunden ist und beide Teile über wenigstens einen gemeinsamen Fügebereich zur gezielten Ableitung wenigstens eines Teils des seitlich auf die Kraftfahrzeugtür einwirkenden Energieeintrages in den Bereich der Kraftfahrzeugkarosserie miteinander in Wirkverbindung bringbar sind, ist derart ausgebildet, dass der erste und/oder zweite Teil durch Energiezufuhr zu einem Wandlerwerkstoff eine mechanische Zustandsänderung und resultierend daraus vorzugsweise eine Formänderung erfährt, durch die beide Teile in Anlage zu bringen, miteinander zu verriegeln und reversibel zu entriegeln sind.

Im Unterschied zu den eingangs beschriebenen, bekannten Lösungen zur Erhöhung der Steifigkeit von Kraftfahrzeugtüren, bei denen die Kraftfahrzeugtür durchragende Seitenaufprallträger vorgesehen sind, die im Kollisionsfall seitlich, in stabilere Karosseriebereiche eindringen, um somit die auf die Kraftfahrzeugtür gerichtete Crash-Energie im Extremfall quer zur Wirkrichtung umzuleiten, gemäß der Druckschriften DE-AS 2 215 674 und DE 196 33 637 A1, sieht die angegebene Lösung eine mit der Kraftfahrzeugtür verbundene stabile Verbindungsstruktur vor, durch die die Crash-Energie, insbesondere in einem Seitenaufprallszenario im Wesentlichen parallel in Wirkrichtung in einen, im Kraftfahrzeug-Innenraum befindlichen Karosseriebereich abgeleitet wird. Selbstverständlich vermag die Verbindungsstruktur auch auf die Seitentür gerichtete Krafteinträge, die aus anderen Raumrichtungen auf die Fahrzeugtür einwirken, als im Falle einer klassischen Seitenaufprallsituation, zu absorbieren bzw. gezielt umzuleiten. Die Besonderheit der Vorrichtung ist darin zu sehen, dass im Idealfall zum einen die Funktionalität der Kraftfahrzeugtür unbeeinträchtigt bleibt, d.h. ein freies Öffnen und Schließen der Tür ist nach wie vor gegeben, zum anderen jedoch bewirkt eine im geschlossenen Zustand der Kraftfahrzeugtür in sich bündige Verbindungsstruktur zwischen Kraftfahrzeugtür und dem Innenraum der Kraftfahrzeug-Karosserie, vorzugsweise im Bereich der Sitzunterkonstruktion, eine stabile Abstützfunktion für einen vorzugsweise in Längsrichtung zur Verbindungsstruktur einwirkenden Energieeintrages im Crash-Fall. Zum anderen erlaubt die wiederholbare Ent- und Verriegelung die Kopplung mit fortschrittlichen, so genannten PreCrash-, bspw. in Form optischer oder radarbasierter Sensoren, die technisch bedingt Fehlinformationen über das kritische Ausmaß der erfassten Situation liefern können und zur Absicherung der Meldung eines bevorstehenden Crashfalles einen erhöhten Aufwand zur Analyse und Bewertung erfordern, die wiederum die Reaktionszeit z.B. zur Verriegelung weiter absenken, wobei die dargelegte Reversibilität der Verriegelung mögliche Fehlinformationen tolerierbar werden lassen und resultierend eine erhöhte Gesamtsicherheit ermöglichen. Zur Realisierung der diese Anforderungen entsprechenden Verbindungsstruktur bieten sich mehrere Ausführungsformen an.

Im einfachsten Fall bietet es sich an, den ersten und zweiten Teil ganz oder teilweise aus einem Wandlerwerkstoff zu fertigen und diesen im Kollisionsfall entsprechend zu aktivieren. Grundsätzlich ist der Einsatz von einer Vielzahl unterschiedlichen, bekannten Wandlerwerkstoffen möglich, vorzugsweise Festkörper-Wandlerwerkstoffe wie Piezo-Keramiken, elektrostriktive Keramiken, Formgedächtnislegierungen (SMA). Derartige Wandlerwerkstoffe erlauben einen direkten Einsatz unter Vorgabe einer für die Verbindungsstruktur geeigneten Formgebung für die mit der Kraftfahrzeugtür sowie dem Innenbereich der Kraftfahrzeug-Karosserie verbundenen Teile.

Darüber hinaus sind jedoch auch fluide Wandlerwerkstoffe, wie beispielsweise Piezo-Polymere, elektrorheologische Fluide, Polymergele sowie magnetorheologische Fluide bekannt, die ggf. unter Vorsehung innerhalb einer geeignet gewählten Kapselung gleichfalls für den Einsatz und die Verwendung im Rahmen der Verbindungsstruktur geeignet sind.

Durch den Einsatz von Wandlerwerkstoffen innerhalb der vorgeschlagenen Verbindungsstruktur ist es möglich, die Steifigkeit sowie das Dämpfungsverhalten der im Kollisionsfall miteinander in Wirkverbindung tretenden Teile und damit des crash-und insassenrelevanten Karosserie-Sitzsystems gezielt einzustellen. Beispielsweise vermögen aus Formgedächtnismaterialien bestehende Wandlerwerkstoffe ihre Form mittels gezielter elektrischer Bestromung in einer vorbestimmten Weise zu verändern und zugleich auch die Materialsteifigkeit und/oder Materialdämpfungseigenschaften zu beeinflussen. Diese Eigenschaft wird in der erfindungsgemäßen Vorrichtung dadurch vorteilhaft genutzt, dass eine aus einem Formgedächtnismaterial bestehende Verbindungsstruktur, die wenigstens über einen Fügebereich zwei voneinander trennbare Teile bzw. Teilbereiche vorsieht, im Falle einer Crash-Situation durch gezielte Zuführung elektrischer Energie derart aktivierbar ist, dass beide Teile eine innige und stabile Wirkverbindung miteinander eingehen, über die die auf die Kraftfahrzeugtür einwirkende Crash-Energie längs der Verbindungsstruktur gezielt in einen stabilen, vorzugsweise in den Bodenbereich des Kraftfahrzeuges, oder energieabsorbierenden Bereich abgeleitet wird.

Neben der Funktion der gezielten Kraftableitung längs der Verbindungsstruktur ermöglicht der eingesetzte Wandlerwerkstoff durch aktive Kontrolle einer gezielt auf den Wandlerwerkstoff einwirkenden Energieform, bspw. in Form elektrischer, thermischer o.ä. Energie, sein Steifigkeits- bzw. Dämpfungsverhalten zu verändern, unter der Maßgabe einer reduzierten physiologischen Belastung der sich im Inneren des Kraftfahrzeuges befindlichen Insassen. Die Regelung bzw. Steuerung des Steifigkeits- bzw. Dämpfungsverhaltens des eingesetzten Wandlerwerkstoffes kann nach unterschiedlichen Zielfunktionen vorgenommen werden, beispielsweise unter Maßgabe einer verminderten Nackenbeschleunigung der sich im Kraftfahrzeug befindlichen Insassen. Die Zielfunktion hängt grundsätzlich vom Alter, Gewicht, Geschlecht, Größe und der jeweiligen Sitzposition der Insassen innerhalb des Kraftfahrzeuges ab.

Selbstverständlich ist die Vorrichtung nicht nur an den Seitentüren eines Kraftfahrzeuges erfolgreich einsetzbar, vielmehr eignet sich die Verbindungsstruktur auch für die Stabilisierung einer Hecktür. Im Falle von Seitentüren hat es sich als besonders vorteilhaft erwiesen, dass jener Teil der Verbindungsstruktur, der mit dem stabilen Karosserie-Innenbereich verbunden ist, jeweils im Bereich unterhalb des Fahrzeugsitzes fest mit der Karosserie in Wirkverbindung steht. Eine derartige Verankerung der im Innenraum der Fahrzeugkarosserie vorgesehenen Verbindungsstruktur wirkt sich in Crash-Situationen physiologisch besonders schonend auf den auf den jeweiligen Fahrzeugsitz befindlichen Insassen aus, insbesondere in Fällen, in denen die Verbindungsstruktur aus den vorstehend beschriebenen Wandlerwerkstoffen mit den damit einstellbaren Dämpfungs- und Steifigkeitsverhalten gefertigt ist.

Die vorstehend beschriebene Ausbildung der Verbindungsstruktur unter Verwendung von Wandlerwerkstoffen setzt jedoch nicht notwendigerweise eine Aktivierung der jeweiligen Werkstoffe mittels extern angelegter Energie voraus, wie beispielsweise die Zufuhr elektrischer Energie, gleichfalls ist es möglich, eine vorstehend ausgebildete Verbindungsstruktur auch rein passiv in vorteilhafter Weise zu nutzen. So erlaubt eine aus Formgedächtnismaterial gefertigte Verbindungsstruktur eine fertigungs- bzw. materialtechnische Einstellung des Steifigkeits- und/oder Dämpfungsverlaufes unter entsprechender Ausnutzung der materialeigenen Eigenschaften (z.B. Superelastizität oder Materialhysterese), wodurch letztlich eine vorgebbare Anpassung des beim Seitenaufprall auf die Fahrzeug-Karosserie und letztlich auf den auf dem Fahrzeugsitz befindlichen Insassen wirkenden Energieeintrag möglich ist.

Ebenso ist eine gezielte quasistatische Einstellung der Material- bzw. Bauteileigenschaften analog zu obiger Beschreibung denkbar. Beispielsweise ist es bei Verwendung von Formgedächtnismetallen denkbar, die thermische Aktivierung für eine variable Einstellung der Materialhysterese zu nutzen.

Ferner ist es denkbar, zur Herstellung der Fügeverbindung die Crashenergie selbst zu nutzen. So kann die Crashenergie zur Verriegelung der Teile der Verbindungsstruktur genutzt werden. Ein aktives Element kann eine nachfolgende Trennung der Teile bewirken, um die Öffnung der Tür und Bergung der Insassen zu ermöglichen bzw. zu erleichtern.

Ebenso ist es denkbar, die Crashenergie zur Aktivierung des Wandlerwerkstoff zu nutzen. Im Falle eines Formgedächtnismetalls kann die mechanische Energie in thermische gewandelt werden, mittels derer dann die eigentliche Aktivierung des Formgedächtniseffekts erreicht wird.

Selbstverständlich sind darüber hinaus Ausführungsbeispiele denkbar, die komplexer ausgebildete Verbindungsstrukturen vorsehen. So ist es denkbar, den jeweils ersten und zweiten Teil der Verbindungsstruktur doppelt auszubilden, so dass eine Parallelanordnung von miteinander in Wirkverbindung tretenden ersten und zweiten Teilen möglich wird. So könnte der erste Teil als ein Rohr mit einer innen verlaufenden getrennten Stange ausgeführt sein, wobei die beiden Komponenten aus jeweils unterschiedlichen Materialien gefertigt sein können. Ebenso könnte alternativ oder in Kombination mit der vorstehenden Variante der zweite Teil eine in Längsrichtung ausgebildete Zweiteilung aufweisen, wobei ein Bereich aus einem Wandlerwerkstoff und der andere aus konventionellem Material bestehen. Die vorstehenden Überlegungen sollen zeigen, dass der Vielfalt zur Ausbildung der Verbindungsstruktur nahezu keine Grenzen gesetzt ist, um letztlich die Verbindungsstruktur unter dem Gesichtspunkt einer effektiven Ableitung bzw. Absorption der Crash-Energie aus dem Bereich der Kraftfahrzeugtür zu optimieren.

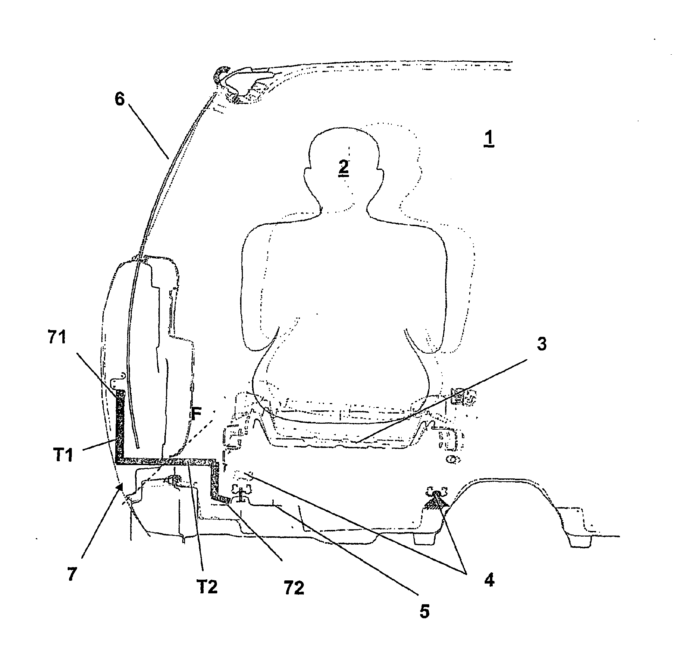

Zur weiteren Verdeutlichung der Vorrichtung zum Insassenschutz bei einem kollisionsbedingten, auf eine Kraftfahrzeugtür gerichteten Energieeintrags sei auf das nachstehend beschriebene, einzige Ausführungsbeispiel unter Bezugnahme auf die Figur verwiesen.

### Darstellung der Erfindung

Die Figur zeigt einen Teilquerschnitt durch ein Kraftfahrzeug, in dessen Kraftfahrzeuginnenraum 1 eine Person 2 auf einem Kraftfahrzeugsitz 3 sitzt. Der Kraftfahrzeugsitz 3 ist über entsprechende Verriegelungselemente 4 mit dem Bodenbereich der Kraftfahrzeug-Karosserie 5 verbunden. Die Funktionsweise der Verriegelungselemente bleibt an dieser Stelle ohne weitere Beachtung. Zur linken Seite der Person 2 befindet sich eine Kraftfahrzeugtür 6, die im geschlossenen Zustand in der Querschnittsdarstellung gezeigt ist. Von besonderer Beachtung ist die Verbindungsstruktur 7, die mit ihrem einen Ende 71 fest im Inneren der Kraftfahrzeugtür 6 angelenkt ist und mit ihrem anderen Ende 72 fest mit dem Bodenbereich der Kraftfahrzeug-Karosserie 5 verbunden ist. Es ist leicht verständlich, dass ein im Rahmen eines Seitenaufpralls seitlich auf die Kraftfahrzeugtür 6 gerichteter Energieeintrag E sehr wirksam über die Verbindungsstruktur 7 in den Bodenbereich der Kraftfahrzeug-Karosserie 5 abgeleitet werden kann, ohne dabei die Kraftfahrzeugtür 6 wesentlich zu deformieren. Dies rührt daher, dass die Verbindungsstruktur 7 eine in Wirkrichtung der Crash-Energie E orientierte Längserstreckung aufweist, längs der die Energie E in den stabilen Bodenbereich der Karosserie 5 überführt wird.

Um die Funktionsweise der Kraftfahrzeugtür im Normalfall nicht zu beeinträchtigen, sieht die Verbindungsstruktur 7 wenigstens einen Fügebereich F vor, der die Verbindungsstruktur 7 in die Teile T1 und T2 auftrennt.

Um sicherzustellen, dass die Teile T1 und T2 der Verbindungsstruktur 7 im Kollisionsfall eine stabile, innige Verbindung eingehen, um letztlich den Energieeintrag E sicher hier in den Bodenbereich der Kraftfahrzeug-Karosserie 5 umzuleiten und die Person P vor physiologischem Schaden zu schützen, sind die Fügebereiche entsprechend konstruiert ausgeführt, und gehen eine stabile Wirkverbindung miteinander ein. Auf die möglichen Ausführungsbeispiele zur Realisierung einer derartigen Wirkverbindung der beiden Teile T1 und T2 sei auf die vorstehende Beschreibung verwiesen.

Das der Vorrichtung zugrunde liegende Ziel, den Insassenschutz beim Seitencrash sowie bei kombinierten Crash-Situationen zu verbessern, wird dadurch erreicht, dass eine gezielte Minderung der physiologischen Beanspruchung der Insassen bei einem Crash durch eine kontrollierte Beeinflussung der auf den Sitz einwirkenden Kräfte bzw. Beschleunigungen bzw. Verformungen realisiert wird. Dies kann in besonders vorteilhafter Weise durch die Ausbildung einer Verbindungsstruktur zwischen der Kraftfahrzeugtür und steifen Bereichen des Sitzunterbodens durch gezielte Verwendung eines Wandlerwerkstoffes, beispielsweise eines Formgedächtnismaterials, hergestellt werden.

### Bezugszeichenliste

- 1: Kraftfahrzeuginnenraum
- 2: Person
- 3: Fahrzeugsitz
- 4: Verriegelungselement
- 5: Kraftfahrzeug-Karosserie
- 6: Kraftfährzeugtür
- 7: Verbindungsstruktur
- 71,72: Enden der Verbindungsstruktur

## Patentansprüche

1. Vorrichtung für ein Kraftfahrzeug zum Insassenschutz bei einem kollisionsbedingten, seitlich auf eine Kraftfahrzeugtür (6) gerichteten Energieeintrag, mit einer Verbindungsstruktur (7), die wenigstens zwei Teile, einen ersten und einen zweiten Teil aufweist, von denen der erste Teil (T1) mit der Kraftfahrzeugtür (6) und der zweite Teil (T2) mit einem Energie absorbierenden, im Fahrzeuginnenraum (1) befindlichen Bereich der Kraftfahrzeugkarosserie (5) fest verbunden ist und beide Teile über wenigstens einen gemeinsamen Fügebereich (F) zur gezielten Ableitung wenigstens eines Teils des seitlich auf die Kraftfahrzeugtür (6) einwirkenden Energieeintrages in den Bereich der Kraftfahrzeugkarosserie (5) miteinander in Wirkverbindung bringbar sind,
**dadurch gekennzeichnet, dass** der erste und/oder zweite Teil (T1, T2) durch Energiezufuhr zu einem Wandlerwerkstoff eine mechanische Zustandsänderung insbesondere in Form einer Formänderung erfährt, durch die beide Teile in Anlage zu bringen und miteinander zu verriegeln sind.

2. Vorrichtung nach Anspruch 1,
**dadurch gekennzeichnet, dass** der erste (T1) und zweite Teil (T2) im Fügebereich (F) jeweils konform zueinander ausgebildete Fügekonturen aufweisen.

3. Vorrichtung nach Anspruch 2,
**dadurch gekennzeichnet, dass** die konformen Fügekonturen beider Teile (T1, T2) derart ausgebildet sind, dass der erste Teil (T1) im Fügebereich (F) den zweiten Teil (T2) zumindest teilweise umschließt oder in diesen teilweise eindringt.

4. Vorrichtung nach einem der Ansprüche 1 bis 3,
**dadurch gekennzeichnet, dass** beide Teile (T1, T2) im Fügebereich (F) durch Schliessen der Kraftfahrzeugtür (6) in gegenseitige Anlage bringbar sind.

5. Vorrichtung nach einem der Ansprüche 1 bis 4,
**dadurch gekennzeichnet, dass** beide in Anlage gebrachte Teile (T1, T2) miteinander ver- und entriegelbar sind.

6. Vorrichtung nach einem der Ansprüche 1 bis 5,
**dadurch gekennzeichnet, dass** der Wandlerwerkstoff aus wenigstens einer der nachfolgenden Werkstoffklassen besteht: Piezo-Keramik, Piezo-Polymer, elektrostriktive Keramik, elektrorheologisches Fluid, Polymergel, magnetorheologisches Fluid, Formgedächtnislegierung, Formgedächtnispolymer.

7. Vorrichtung nach einem der Ansprüche 1 bis 6,
**dadurch gekennzeichnet, dass** der erste (T1) und/oder zweite Teil (T2) oder zumindest Teilbereiche des ersten und/oder zweiten Teils aus einem Wandlerwerkstoff besteht, der unmittelbar vor und während des kollisionsbedingten, auf eine Kraftfahrzeugtür gerichteten Energieeintrag eine Formänderung derart erfährt, dass beide Teile in einer lösbar feste Wirkverbindung treten.

8. Vorrichtung nach einem der Ansprüche 1 bis 7,
**dadurch gekennzeichnet, dass** eine Annäherungssensorik am oder im Kraftfahrzeug vorgesehen ist, die eine unvermeidbare Kollisionssituation erfasst und ein Signal erzeugt, durch das das wenigstens eine aktive Element und/oder die intelligente Struktur aktivierbar ist.

9. Vorrichtung nach einem der Ansprüche 1 bis 8,
**dadurch gekennzeichnet, dass** die Kraftfahrzeugtür (6) eine Seitentür ist, und dass der zweite Teil (T2) im Karosseriebodenbereich neben oder unterhalb der Sitzunterkonstruktion befestigt ist.

10. Vorrichtung nach einem der Ansprüche 1 bis 9,
**dadurch gekennzeichnet, dass** die mechanischen Zustandsänderung eine das Schwingungs- und/oder das Dämpfungsverhalten des Wandlerwerkstoffes beeinflussende Wirkung erzielt.

11. Vorrichtung nach einem der Ansprüche 1 bis 10,
**dadurch gekennzeichnet, dass** die Energiezufuhr an der Wandlerwerkstoff von der Crashenergie unabhängig ist.

## Claims

1. A device for a motor vehicle that affords occupant protection during the impact of energy directed laterally against a motor vehicle door (6) as a result of a collision, the device having a connecting structure (7) comprising at least two parts, a first part and a second part of which the first part (T1) is firmly connected to the motor vehicle door (6) and the second part (T2) is firmly connected to an energy-absorbing area of the motor vehicle body (5) located in the interior of the motor vehicle (1) and the two parts can be brought to enter an active connection via at least one common joining section (F) for selective diversion of at least a part of the impact energy acting laterally on the motor vehicle door (6) into the area of the body of the motor vehicle (5),
**wherein** the first and/or second part (T1, T2) undergo, due to energy input to a transformable material, a change in mechanical state in particular in the form of a change in shape due to which the two parts are made to adjoin and interlock.

2. The device according to claim 1,
**wherein** the first part (T1) and/or the second part (T2) each have conform-designed joining contours in the joining section (F).

3. The device according to claim 2,
**wherein** the conform joining contours of both parts (T1, T2) are designed in such a manner that the first part (T1) at least partially encloses or partially enters the second part (T2) in the joining section (F).

4. The device according to one of the claims 1 to 3,
**wherein** the two parts (T1, T2) are made to adjoin in the joining section (F) by closing the motor vehicle door (6).

5. The device according to one of the claims 1 to 4,
**wherein** the two made-to-adjoin parts (T1, T2) are interlockable and unlockable.

6. The device according to one of the claims 1 to 5,
**wherein** the transformable material is made of at least one of the following classes of material: piezo-ceramics, piezo-polymer, electrostrictive ceramics, electrorheological fluid, polymer gel, magnetorheological fluid, shape-memory alloy, shape-memory polymer.

7. The device according to one of the claims 1 to 6,
**wherein** the first part(T1) and/or the second part (T2) or at least partial areas of the first and/or second part are made of a transformable material which undergoes a change in shape directly before and during the impact of energy directed at the motor vehicle door as a result of a collision in such a manner that the two parts enter a firm, dissoluble active connection.

8. A device according to one of the claims 1 to 7,
**wherein** on or in the motor vehicle, an approach sensory mechanism is provided, which detects an unavoidable collision situation and generates a signal by means of which the at least one active element and/or the intelligent structure is activatable.

9. The device according to one of the claims 1 to 8,
**wherein** the motor vehicle door (6) is a side door and the second part (T2) is attached in the floor region of the motor vehicle body next to or under the substructure of the seat.

10. The device according to one the claims 1 to 9,
**wherein** the change in mechanical state yields an effect which influences the vibration behavior and/or dampening behavior of the transformable material.

11. The device according to one of the claims 1 to 10,
**wherein** the energy input to the transformable material is independent of the crash energy.

## Revendications

1. Dispositif pour un véhicule automobile, destiné à la protection des occupants lors d'une introduction d'énergie due à une collision, orientée latéralement sur une portière du véhicule (6), avec une structure de liaison (7), comportant au moins deux parties, une première partie et une deuxième partie, dont la première partie (T1) est fixement reliée à la portière du véhicule (6) et la deuxième partie (T2) est fixement reliée avec une zone de la carrosserie du véhicule (5) absorbant l'énergie, située dans l'habitacle du véhicule (1) et les deux parties sont susceptibles d'être amenées en liaison active mutuelle via au moins une zone d'assemblage commune (F) pour la dérivation adéquate dans la zone de la carrosserie du véhicule automobile (5) d'au moins une partie de l'introduction d'énergie agissant latéralement sur la portière du véhicule (6),
**caractérisé en ce que** la première et/ou la deuxième partie (T1, T2) subit par apport d'énergie vers un matériau transducteur une modification d'état mécanique, notamment sous la forme d'une modification de forme, par laquelle les deux parties doivent être amenées en appui et verrouillées ensemble.

2. Dispositif selon la revendication 1,
**caractérisé en ce que** la première (t1) et la deuxième partie (T2) comportent dans la zone d'assemblage (F) des contours d'assemblage conçus de façon mutuellement conforme.

3. Dispositif selon la revendication 2,
**caractérisé en ce que** les contours d'assemblage conformes des deux parties (T1, T2) sont conçus de sorte que la dans la zone d'assemblage (F), la première partie (T1) entoure au moins partiellement la deuxième partie (T2) ou pénètre partiellement dans cette dernière.

4. Dispositif selon l'une quelconque des revendications 1 à 3,
**caractérisé en ce que** les deux parties (T1, T2) sont susceptibles d'être amenées en appui mutuel dans la zone d'assemblage (F) par fermeture de la portière du véhicule (6).

5. Dispositif selon l'une quelconque des revendications 1 à 4,
**caractérisé en ce que** les deux parties (T1, T2) amenées en appui mutuel sont susceptibles d'être verrouillées l'une à l'autre et déverrouillées l'une de l'autre.

6. Dispositif selon l'une quelconque des revendications 1 à 5,
**caractérisé en ce que** le matériau transducteur consiste dans au moins l'une des classes de matières suivantes : piézocéramique, piézopolymère, céramique électrostrictive, fluide électrorhéologique, gel polymère, fluide magnétorhéologique, alliage à mémoire de forme, polymère à mémoire de forme.

7. Dispositif selon l'une quelconque des revendications 1 à 6,
**caractérisé en ce que** la première (T1) et/ou la deuxième partie (T2) ou au moins des zones partielles de la première et/ou de la deuxième partie consiste(nt) dans un matériau transducteur, qui directement avant ou pendant l'introduction d'énergie due à une collision, orientée sur une portière de véhicule automobile subit une modification de forme de sorte que les deux parties passent en liaison active solide amovible.

8. Dispositif selon l'une quelconque des revendications 1 à 7,
**caractérisé en ce qu'**un dispositif de capteurs de proximité détectant une situation de collision inévitable et générant un signal, par lequel l'au moins un élément actif et/ou la structure intelligente est activable est prévu sur ou dans le véhicule automobile.

9. Dispositif selon l'une quelconque des revendications 1 à 8,
**caractérisé en ce que** la portière du véhicule automobile (6) est une portière latérale et **en ce que** la deuxième partie (T2) est fixée dans la zone du fond de la carrosserie, à côté ou sous la substructure du siège.

10. Dispositif selon l'une quelconque des revendications 1 à 9,
**caractérisé en ce que** la modification d'état mécanique a un effet influençant le comportement en vibration et/ou en amortissement du matériau transducteur.

11. Dispositif selon l'une quelconque des revendications 1 à 10,
**caractérisé en ce que** l'apport d'énergie au matériau transducteur dépend de l'énergie du crash.
